# EUROPEAN PATENT APPLICATION

(11) **EP 3 764 119 A1**
(43) Date of publication of application: **13.01.2021**
(21) Application number: 19185453.8
(22) Date of filing: 10.07.2019
(51) Int. Cl.: G01S 5/00, H04B 1/713, H04B 1/7143

(54) **FREQUENCY HOPPING TRANSMISSION METHOD, TRANSMITTER, RECEIVER AND SYSTEM FOR PROVIDING FREQUENCY HOPPING TRANSMISSIONS**

(71) Applicant: Rohde & Schwarz GmbH & Co. KG, 81671 München (DE)
(72) Inventor: HAAS, Erik, 81673 Munich (DE)
(74) Representative: Isarpatent

(57) **Abstract**

The present invention provides an improved hopping radio transmission approach. In particular, an overhead-free hopping radio transmission is pro-vided. It is for this purpose that a number of short initial signals are transmitted by a transmitter for indicating a hopping operation. Upon receiving such a signaling from a transmitter, a receiver may change its receiving frequency or receiving channel. Further, the transmitter also changes its frequency or transmission channel after completing the transmission of the signaling. In this way, a successive data transmission can be performed on the further frequency or channel without transmitting any additional data between the transmitter and the receiver.

## Description

### TECHNICAL FIELD

The present invention relates to a hopping radio transmission method. The present invention relates further to a transmitter, a receiver and a system for providing hopping radio transmissions. In particular, the present invention relates to an overhead-free hopping radio transmission.

### BACKGROUND

Although applicable in principle to any kind of hopping, the present invention and its underlying problem will be hereinafter described in more detail in conjunction with frequency hopping.

Frequency hopping may provide a method of transmitting radio signals by switching a carrier among many frequency channels. For example, a pseudorandom sequence may be applied, wherein the sequence is known to both transmitter and receiver. For example, an available frequency band may be divided into sub-frequencies. Transmitted signals may change among the sub-frequencies in a predetermined order. Thus, interferences at a specific frequency will only affect the signal during a short interval when the frequency of the respective channel is used. In this way, a jamming resistant communication may be achieved and consequently, the robustness of the communication can be improved.

Conventional hopping approaches usually require a complex communication and synchronization between a transmitter and a receiver. For this purpose, additional data have to be provided from a transmitter to a receiver in advance. Accordingly, the additional data which have to be transmitted cause an overhead of data. Consequently, the effective data rate decreases.

Against this background, a problem addressed by the present invention is to provide an efficient hopping radio transmission. In particular, the present invention aims to provide an overhead-free hopping radio transmission.

### SUMMARY

The present invention solves this problem with a hopping radio transmission method, a transmitter, a receiver and a system for providing hopping radio transmission with the features of the independent claims. Further advantageous embodiments are subject-matter of the dependent claims.

According to a first aspect, a radio transmission method is provided. The transmission method provides a transmission from a transmitter to a receiver. The method comprises a step of transmitting, by a transmitter, a number of one or more synchronization signals. The transmission of the number of synchronization signals is performed by using a first frequency. After the transmission of the synchronization signals by the transmitter has been completed, a frequency of the transmitter is changed to a further frequency. The further frequency is determined according to a predetermined hopping schedule. The method further comprises a step of receiving, by a receiver, at least one of the synchronization signals transmitted by the transmitter. After the receiver has received at least one of the synchronization signals, the receiver changes the frequency of the receiver to the further frequency. The determination of the further frequency for the frequency of the receiver corresponds to the determination of the further frequency determined by the transmitter. After the transmitter has changed the frequency to the further frequency, the transmitter transmits a data burst.

According to a second aspect, a transmitter for providing hopping radio transmission is provided. The transmitter is configured to transmit a number of one or more synchronization signals. The transmission of the number of synchronization signals is performed by using a first frequency. The transmitter is further configured to change a frequency of the transmitter to a further frequency. The further frequency is determined according to a predetermined hopping schedule. The transmitter is further configured to transmit a data burst after the transmitter has changed the frequency to the further frequency.

According to a third aspect, a receiver for receiving hopping radio transmission is provided. The receiver is configured to receive at least one synchronization signal transmitted by a transmitter. The receiver is further configured to change a frequency of the receiver to a further frequency after receiving at least one synchronization signal. Further, the receiver is configured to receive a data burst transmitted by the receiver at the further frequency. The further frequency is determined according to a predetermined hopping schedule.

According to a fourth aspect, a system for providing hopping radio transmission is provided. The system comprises at least one transmitter according to the second aspect and at least one receiver according to the third aspect.

The present invention is based on the fact that a hopping radio transmission provides many advantageous benefits. For example, hopping radio transmission provides improved security and resistance against disturbances, for example jamming. However, conventional approaches for hopping radio transmission usually require additional data transmission from a transmitter to a receiver in order to synchronize the related devices. The additional data have to be transmitted by additional data packets or by an additional or enlarged header of a data packet. Thus, this additional communication requires an overhead, and consequently, the effective data rate of communication decreases.

It is therefore an idea of the present invention to provide an improved and overhead-free hopping radio transmission. In particular, the present invention aims to achieve a hopping radio transmission without the need of providing additional data from a transmitter to a receiver during the communication. Moreover, transmitters and receivers of a communication system are synchronized by short initial signals such as a blip. Accordingly, the hopping, in particular the change of the operating frequencies of the transmitter and the receiver is synchronized based on these short initial synchronization signals. Upon receiving such a synchronization signal on a specific frequency, a subsequent frequency is selected based on a predetermined hopping schedule. In this way, there is no need for transmitting and processing additional data for performing the hopping radio transmission.

Accordingly, the hopping scheme of the hopping radio transmission approach is performed by using only very short initial synchronization signals in addition to the data of the data burst. Thus, no additional overhead of data has to be transmitted from a transmitter to a receiver for performing the hopping approach. Consequently, by avoiding such an overhead, the effective data rate can be increased.

Furthermore, by synchronizing the frequencies of the transmitter and the receiver based on the short synchronization signals, and by determining the appropriate frequency based on the synchronization signals in connection with a predetermined hopping schedule, a very reliable and robust approach for identifying the current frequency can be achieved. Hence, the robustness of the hopping radio transmission can be further improved.

The predetermined hopping schedule may be any kind of scheme for defining a sequence of frequencies or a sequence of communication channels. For example, the predetermined hopping schedule may be specified in advance and stored in appropriate memories of the transmitter and the receiver. Furthermore, it may be possible to provide the transmitter and the receiver with the predetermined hopping schedule in advance based on an appropriate control message. For example, such a control message may be provided to the transmitter and the receiver by a wired or wireless communication link from a controller or the like. In particular, a secured communication channel may be used for providing the predetermined hopping schedule from the controller to the transmitter and the receiver.

The order of the operating frequencies or the corresponding communication channels may be specified in advance as described above. Furthermore, the next frequency for transmitting a data burst may be easily indicated by transmitting one or more synchronization signals at a former frequency. Hence, by receiving a synchronization signal at a specific frequency, the receiver can easily determine the further frequency, and set the configuration of the receiver accordingly. Consequently, no further data exchange between the transmitter and the receiver is required.

The transmitter may transmit a number of one or more synchronization signals. By transmitting more than one synchronization signals at a specific frequency, the reliability and the robustness of the communication and the signaling of the frequency change can be improved. Since the receiver requires only a single synchronization signal for recognizing a change to a further frequency, it is impossible that the receiver can perform a frequency change if one or some of the synchronization signals are lost, as long as at least one synchronization signal is received by the receiver.

Further embodiments of the present invention are subject of the further sub-claims and the following description referring to the drawings.

In a possible embodiment, the synchronization signal comprises a synchronization signal without header information. In particular, the synchronization signal may comprise a blip. A blip is considered to be a simple radar indication. Hence, by providing only a simple short initial signaling from the transmitter to the receiver, the receiver may recognize a desired frequency change. Accordingly, by receiving the short initial signaling at a specific frequency, the receiver may determine the further frequency and sets the receiver accordingly.

In a possible embodiment, the determination of a point in time when the frequency changes is based on an external signal, in particular an external time signal. In particular, a point of time when the frequency of the devices, in particular the transmitter and the receiver changes from a frequency to a further frequency may be determined according to an externally provided signal. In this way, a very precise synchronization of the frequency change between the transmitter and the receiver can be achieved.

In a possible embodiment, the time signal may be a signal of a global navigation satellite system (GNSS). In particular, the time signal may be a signal of a global positioning system (GPS). Since signals of a global navigation system usually provide a very precise time basis, the timing provided by these signals may provide a very accurate synchronization for performing a frequency change. Thus, deviations in the timing of the frequency change between a transmitter and a receiver can be minimized.

In a possible embodiment, the frequency of the transmitter and the frequency of the receiver is maintained to be the same while transmitting the data burst. Especially, the operating frequencies of the transmitter and the receiver may be maintained until the transmission of the whole data burst has been finished. Accordingly, a same frequency may be maintained even though the transmission of the data burst requires a time, which exceeds a time window for a specific frequency according to the hopping schedule. In this way, no confusion or synchronization problem may arise during the transmission of the data burst.

In a possible embodiment, the step of transmitting a data burst may comprise a step of dividing the data burst into a sequence of data segments, and a step of transmitting each segment of the sequence of data segments by an individual frequency. In particular, the individual operating frequencies for the respective data segments may be determined according to the hopping schedule. For example, a data burst may comprise multiple blocks, and accordingly, each data block may be transmitted by using an individual frequency or transmission channel. Accordingly, frequency hopping may be applied between each transmission of the data segments. In this way, the advantages of the hopping radio transmission may be applied during the transmission of the data burst. For example, each segment of the sequence of data segments may relate to a same amount of data. However, it is understood that any other approach for dividing a data burst into segments may be also possible.

In a possible embodiment, a single synchronization is applied for transmitting all data segments of a data burst. Accordingly, the transmitter only transmits a number of synchronization signals before transmitting the individual segments of a sequence of data segments of a data burst. In this way, a very efficient transmission of the data burst can be achieved.

In a possible embodiment, a separate synchronization is applied for transmitting the data segments of a data burst. Accordingly, a separate synchronization by transmitting the number of synchronization signals from the transmitter to the receiver is performed for each change of the frequency during a transmission of data segments of a data burst. In this way, a very reliable synchronization of the frequency changes during the transmission of the data burst can be achieved.

In a possible embodiment of the transmitter for the hopping radio transmission, the transmitter may be configured to apply a carrier sense multiple access (CSMA). In particular, the transmitter may be configured to apply a carrier sense multiple access with collision avoidance (CSMA/CA). CSMA/CA is a network multiple access method, in which carrier sensing is used. Individual transmitters may attempt to avoid collisions by beginning transmission only after a channel is sensed to be "idle". If a channel is occupied, a transmitter may pause for a predetermined period of time before sensing the respective channel again.

In a possible embodiment of the receiver, the receiver may be configured to receive a data burst at the first frequency, if no synchronization signal from a transmitter is received. Accordingly, the receiver maintains at the first frequency as long as no synchronization signal from a transmitter is received. Further to this, the receiving frequency of the receiver may be further determined according to the hopping schedule in association with a timing signal.

In a possible embodiment of the system, the at least one transmitter and the at least one receiver each comprise a determination device. The determination devices may be configured to determine the further frequency based on an external time signal.

In a possible embodiment, each determining device may comprise a global navigation system signal receiver. Accordingly, the further frequency may be determined based on a timing signal of the signal received by the global navigation system receiver.

With the present invention it is therefore now possible to achieve an improved hopping radio transmission. Since the signaling of the hopping is indicated by a simple short initial signal, no further data have to be exchanged between the transmitter and the receiver during the data transmission. Accordingly, an overhead of data can be avoided. In this way, the efficiency and the data rate of the data transmission can be improved. Furthermore, by a signaling of a frequency change by a simple synchronization signal, the robustness can be improved and thus, the reliability of the data transmission can be further enhanced.

### BRIEF DESCRIPTION OF THE DRAWINGS

For a more complete understanding of the present invention and advantages thereof, reference is now made to the following description in conjunction with the accompanying drawings. The invention is explained in more detail below using exemplary embodiments, which are specified in the schematic figures and the drawings, in which:
- Fig. 1:: shows a schematic diagram of a communication system with a transmitter and a receiver according to an embodiment;
- Fig. 2:: shows a schematic diagram illustrating a transmission scheme according to an embodiment;
- Fig. 3:: shows a schematic diagram of a further transmission scheme according to an embodiment;
- Fig. 4:: shows a schematic diagram of still a further transmission scheme according to an embodiment; and
- Fig. 5:: shows a flow diagram of a method according to an embodiment of the present invention.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown in scale.

In the drawings, same, functionally equivalent and identical operating elements, features and components are provided with same reference signs in each case, unless stated otherwise.

### DETAILED DESCRIPTION OF THE DRAWINGS

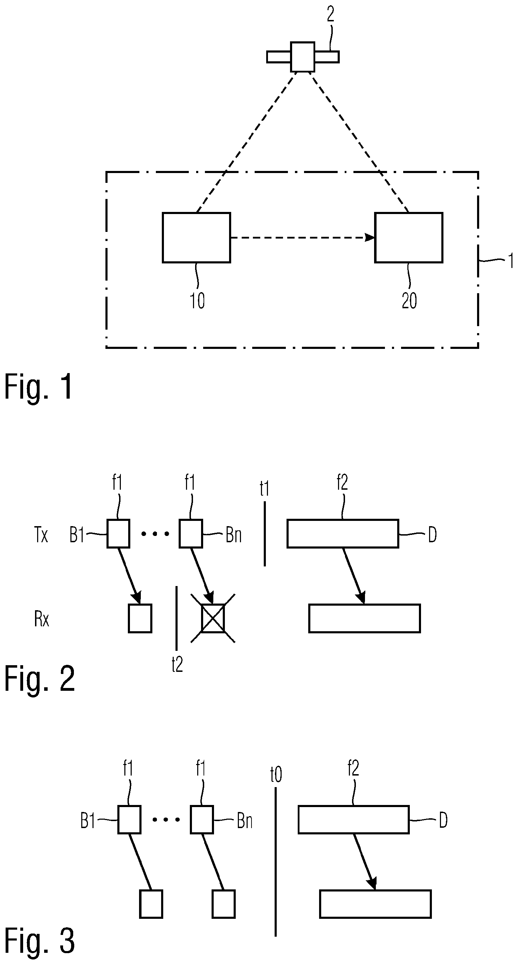

Figure 1 shows a schematic diagram of a communication system 1 according to an embodiment. The communication system 1 may provide hopping radio transmission. In particular, the system 1 may comprise at least one transmitter 10 and at least one receiver 20. A wireless communication link may be established between the transmitter 10 and the receiver 20. Even though, only a single transmitter 10 and a single receiver 20 are illustrated in Figure 1, the communication system 1 may comprise any number of transmitter 10 and any number of receiver 20. Furthermore, it may be also possible to establish a bidirectional communication. In this case, a device may be a combined transmitter and receiver, also known as transceiver.

For transmitting data from a transmitter 10 to a receiver 20, a hopping radio transmission may be performed. For this purpose, multiple communication channels having individual carrier frequencies may be used in an alternating order. It is for this purpose that the transmitter 10 and the receiver 20 have to be synchronized in order to use same communication channels or same operating frequencies during a data transmission. Hence, synchronization between a transmitter 10 and the receiver 20 is required.

At the beginning of a transmission, transmitter 10 and receiver 20 may use a predetermined communication channel or a specific frequency. The frequency may relate, for example, to a carrier frequency of a communication channel. For example, the transmission channel order frequency may be defined according to a specific schedule. For this purpose, a specific initial communication channel or frequency may be used when initializing the transmitter 10 and the receiver 20. Furthermore, it may be possible to determine the communication channel or the frequency based on a specific schedule. For this purpose, the channel or the frequency may be determined, for example, based on a current time or the like. For example, all related devices, in particular transmitter 10 and receiver 20 may obtain a timing signal from an external device 2. Especially, a time signal of a global navigation satellite system (GNSS) such as Global Positioning System (GPS) may be used for obtaining a time basis. However, any other scheme for providing a time basis or for determining an additional state of the transmitter or the receiver may be possible, too.

In the following, the procedure of a hopping operation for changing the frequency or communication channel is described.

Transmitter 10 starts a hopping operation by transmitting a number of one or more synchronization signals. The synchronization signals are transmitted by the transmitter 10 by using an initial first frequency. For example, the initial first frequency may be a frequency of a communication link currently established between a transmitter 10 and the receiver 20. The synchronization signal may be a short initial signal. In particular, the synchronization signal may be any kind of signal, which is transmitted from the transmitter 10 to the receiver 20 via the air. In particular, the synchronization signal does not comprise any kind of header information or any other kind of data encoded in the synchronization signal. For example, the synchronization signal may be a radar indication, for example a blip. Such a radar indication or blip may be already used for channel contention.

As already mentioned above, a single synchronization signal may be transmitted from the transmitter 10 to the receiver 20. However, it may be also possible to transmit multiple successive synchronization signals. When transmitting multiple synchronization signals, all synchronization signals may be transmitted using a same frequency.

Receiver 20 may receive the one or more synchronization signals from the transmitter 10. In particular, it may be sufficient that receiver 20 receives at least one of the synchronization signals transmitted by transmitter 10. Furthermore, as it will be described in more detail below, it may be even possible that receiver 20 may receive data without receiving a synchronization signal in advance.

After receiver 20 has received a synchronization signal of a first frequency, receiver 20 may change to a further frequency. In this way, frequency hopping from the initial frequency to the further frequency may be performed. The further frequency may be determined according to a predetermined hopping schedule.

For example, the further frequency may be determined according to the hopping schedule in that the hopping schedule defines a specific order for changing the frequencies. For example, a well-defined order for changing the operating frequencies may be specified by the hopping schedule. Furthermore, the frequencies according to the hopping schedule may be also specified based on a specific point in time. For example, the hopping schedule may specify a specific frequency for each point in time or may specify specific frequencies for specific periods of time. For this purpose, transmitter 10 and receiver 20 may refer to a time signal such as a time signal of a GNSS or the like. However, any other scheme for specifying the manner of selecting a frequency or transmission channel based on a hopping schedule may be also possible.

As already mentioned above, receiver 20 may change the frequency from the first frequency to a further frequency after receiving a synchronization signal from transmitter 10. Hence, after changing the frequency of receiver 20, receiver 20 may be not in the position to receive further synchronization signals transmitted by transmitter 10 at the first frequency. However, if a first synchronization signal from transmitter 10 is lost, receiver 20 might remain at the first frequency and thus, receiver 20 may receive one of the successive synchronization signals transmitted by transmitter 10 at the first frequency. Consequently, by transmitting multiple synchronization signals by transmitter 10 at the first frequency, the reliability for the frequency change of the receiver 20 can be improved.

After transmitter 10 has completed the transmission of the one or more synchronization signals at the first frequency, transmitter 10 also changes its frequency to the further frequency. For this purpose, transmitter 10 applies the same scheme for determining the further frequency as performed by the receiver 20.

In this way, transmitter 10 has changed to the further frequency after completing the transmission of the synchronization signals, and receiver 20 has changed to the further frequency after receiving at least one of the synchronization signals transmitted by transmitter 10. Consequently, transmitter 10 and receiver 20 both have changed to the further frequency. The change from the first frequency to the further frequency is performed without any transmission of data, in particular without any specific header information or the like from the transmitter 10 to the receiver 20.

After transmitter 10 and receiver 20 both have changed to the further frequency, transmitter 10 may start a data transmission. In particular, transmitter 10 may transmit data, for example a data burst, by using the further frequency. Since receiver 20 also has changed the further frequency, receiver 20 may receive the data transmitted by transmitter 10 at the further frequency.

After completing the transmission of a data burst by transmitter 10 to receiver 20, transmitter 10 and receiver 20 may maintain the further frequency. Thus, further data transmission may be performed by a further frequency. However, it may be also possible that transmitter 10 may transmit one or more synchronization signals by using the further frequency in order to initiate a further hopping operation. In this way, multiple hopping operations may be performed.

As long as no further hopping operation is initiated, transmitter 10 and receiver 20 may remain on the respective frequency. Hence, if transmitter 10 transmits a data burst without a previous transmission of synchronization signals, receiver 20 may be in the position to receive this transmission of the data burst, since both transmitter 10 and receiver 20 still are operated by the same frequency.

In the following, some examples for further explaining the hopping radio transmission scheme are provided.

Figure 2 shows a schematic diagram illustrating a hopping procedure according to an embodiment. In the upper row, the transmissions of transmitter 10 are illustrated. In the lower row, the receptions of receiver 20 are illustrated. Accordingly, transmitter 10 transmits a number of synchronization signals B1-Bn. The synchronization signals are transmitted by using a first frequency f1. Even though two transmissions are illustrated in Figure 1, it is understood that the present invention is not limited to two synchronization signals. Furthermore, any number of transmission signals Bi may be possible.

Receiver 20 receives the first synchronization signal B1 based on the first frequency f1. After receiver 20 has received the first synchronization signal B1, receiver 20 changes the frequency to a further frequency. The change of the frequency from the first frequency to a further frequency may take place at a time t2. Consequently, when transmitter 10 transmits a further synchronization signal Bn at a point in time later than t2, receiver 20 may not receive this synchronization signal. This is illustrated in Figure 2 by crossing out the reception of the successive synchronization signal Bn.

After transmitter 10 has completed the transmission of all synchronization signals Bi by using the first frequency f1, transmitter 10 also changes to the further frequency f2. This frequency change may take place at time t1.

After both, the receiver 20 and the transmitter 10 have changed to the further frequency f2, transmitter 10 may perform a data transmission. For example, transmitter 10 may transmit a data burst D by using the further frequency f2. Since receiver 20 also has changed to the further frequency f2, receiver 20 may receive the data burst from the receiver 10. In the following, additional data bursts may be transmitted by using the further frequency f2. Furthermore, transmitter 10 may transmit one or more synchronization signals on the further frequency f2 in order to initiate a further hopping operation to still another frequency.

Figure 3 shows another diagram for illustrating a hopping radio transmission according to an embodiment. The transmission of the synchronization signals Bi and the data bursts D correspond to the transmissions as already described in connection with Figure 2. The transmission scheme according to Figure 3 mainly differs from the previous described transmission scheme by the point in time when the frequency of the transmitter 10 and the receiver 20 changes. While according to the previously described scheme according to Figure 2 the frequency change of the receiver 20 is performed directly after receiving a synchronization signal Bi, and the change of the frequency of the transmitter 10 is performed after completing the transmission of all synchronization signals Bi, the frequency change in the embodiment according to Figure 3 is performed at a specific point in time t0. For example, this specific point in time t0 may be determined based on a predetermined hopping time schedule. For example, this predetermined hopping time schedule may specify a fixed timing for applying a frequency change. Accordingly, a next possible point in time for changing the frequency may be selected after transmitting/receiving the synchronization signals. In order to achieve a very precise synchronization of the frequency change, the point in time when the frequency change is performed may be based on a common time signal, in particular a time signal provided from an external source. For example, the point in time when the frequency change is performed may be synchronized based on time information of a GNSS, in particular a GPS signal. In this way, the frequency of the transmitter 10 and the receiver 20 change at the same point in time t0.

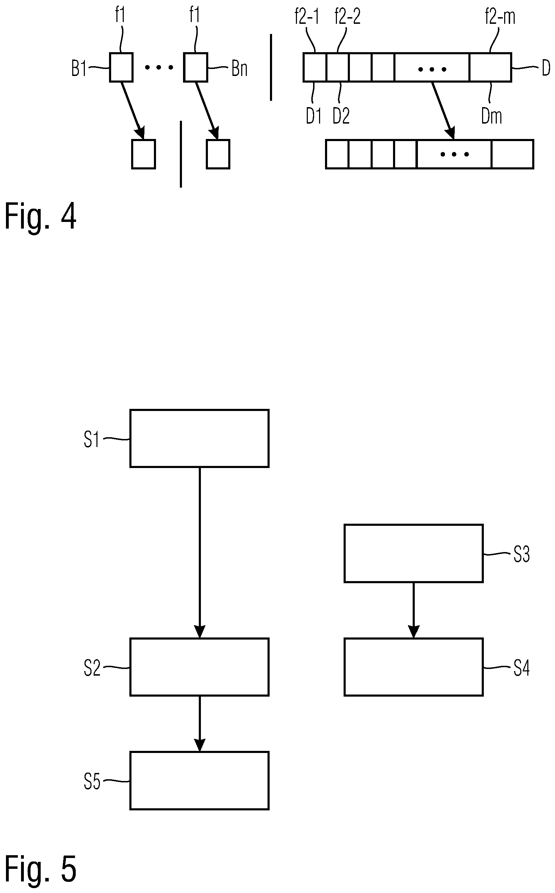

Figure 4 shows a further diagram for illustrating data transmission applying hopping radio transmission. The transmission of the synchronization signals and the frequency change may be performed as already described in connection with Figures 2 or 3. The example according to Figure 4 mainly differs from the previously described example in that the transmission of the data burst D is performed in a different manner. In particular, the data burst D is separated into a number of data segments Di. Accordingly, the data burst D comprises a sequence of the data segments Di. Based on this sequence of data segments Di, an individual frequency f2i may be used for transmitting each of the data segments Di. Accordingly, an individual frequency f2i may be determined according to the hopping schedule and transmitter 10 and receiver 20 may change the operating frequencies for transmitting/receiving each of the data segments Di.

For example, the frequency of the transmitter 10 and the receiver 20 may automatically change to the next frequency after transmitting/receiving the respective data segment Di. Alternatively, an individual synchronization for establishing a hopping by transmitting synchronization signals as described above may be applied before each transmission of a data segment.

Figure 5 shows a flow diagram illustrating a hopping radio transmission method according to an embodiment. It is understood that the hopping radio transmission method may comprise each step for performing an operation as described above in connection with the transmission system 1. Accordingly, the above described transmission system 1 may comprise any kind of device for performing an operation as described below in connection with the hopping radio transmission method.

In a step S1, a transmission 10 transmits a number of one or more synchronization signals Bi. The transmission of the number of synchronization signals Bi may be performed by using a first frequency f1. In a step S2, a frequency of the transmitter 10 may be changed to a further frequency f2. In particular, the change may be performed after transmitting the number of synchronization signals Bi. The further frequency may be determined according to a predetermined hopping schedule.

In a step S3, a receiver may receive at least one synchronization signal transmitted by the receiver 10. In step S4, the receiver may change a frequency of the receiver 10 to a further frequency f2. The change of the frequency may be performed after receiving at least one of the synchronization signals Bi. In step S5, the transmitter may transmit a data burst D. The data burst D is transmitted after the transmitter has changed the frequency to the further frequency f2.

Summarizing, the present invention provides an improved hopping radio transmission approach. In particular, an overhead-free hopping radio transmission is provided. It is for this purpose that a number of short initial signals are transmitted by a transmitter for indicating a hopping operation. Upon receiving such a signaling from a transmitter, a receiver may change its receiving frequency or receiving channel. Further, the transmitter also changes its frequency or transmission channel after completing the transmission of the signaling. In this way, a successive data transmission can be performed on the further frequency or channel without transmitting any additional data between the transmitter and the receiver.

## Claims

1. Hopping radio transmission method, comprising the steps of:
transmitting (S1), by a transmitter (10), a number of one or more synchronization signals (Bi), wherein the transmission of the number of synchronization signals (Bi) is performed by using a first frequency (f1);
changing (S2) a frequency of the transmitter (10) to a further frequency (f2) after transmitting the number of synchronization signals (Bi), wherein the further frequency (f2) is determined according to a predetermined hopping schedule;
receiving (S3), by a receiver (20), at least one of the synchronization signals (Bi) transmitted by the transmitter (10);
changing (S4), by the receiver (20), a frequency of the receiver (20) to the further frequency (f2) after receiving at least one of the synchronization signals (Bi); and
transmitting (S5), by the transmitter (10), a data burst (D) after the transmitter (10) has changed the frequency to the further frequency (f2).

2. Method according to claim 1, wherein the synchronization signal (Bi) comprises a blip or a synchronization signal without header information.

3. Method according to claim 1 or 2, wherein a point in time when the frequency is changed to the further frequency (f2) is based on an external time signal.

4. Method according to claim 3, wherein the external time signal is a time signal of a global navigation satellite system (2).

5. Method according to any of claims 1 to 4, wherein the frequency of the transmitter (10) and the frequency of the receiver (20) is maintained while transmitting (S5) the data burst (D) until the transmission of a data burst (D) has been finished.

6. Method according to any of claims 1 to 4, wherein the transmitting (S5) of a data burst (D) comprises:
dividing the data burst (D) into a sequence of data segments (Di);
transmitting each segment (Di) of the sequence of data segments by an individual frequency (f2i) according the hopping schedule.

7. Method according to claim 6, wherein a single synchronization is applied for transmitting the data segments (Di) of a data burst (D).

8. Method according to claim 6, wherein separate synchronization is applied for each transmission of the data segments (Di) of a data burst (D).

9. Transmitter (10) for providing hopping radio transmission, the transmitter (10) is configured to transmit a number of one or more synchronization signals (Bi), wherein the transmission of the number of synchronization signals (Bi) is performed by using a first frequency (f1), change an frequency of the transmitter (10) to a further frequency (f2), wherein the further frequency (f2) is determined according to a predetermined hopping schedule, and transmit a data burst (D) after the transmitter (10) has changed the frequency to the further frequency (f2).

10. Transmitter (10) according to claim 9, wherein the transmitter (10) is configured to apply carrier sense multiple access, in particular carrier sense multiple access with collision avoidance.

11. Receiver (20) for receiving hopping radio transmission, the receiver (20) is configured to receive at least one synchronization signal (Bi) transmitted by s transmitter (10), change an frequency of the receiver (20) to a further frequency (f2) after receiving at least one synchronization signal (bi), and receive a data burst (D) transmitted by the transmitter (10) at the further frequency (f2), wherein the further frequency (f2) is determined according to a predetermined hopping schedule.

12. Receiver (20) according to claim 11, wherein the receiver (20) is configured to receive a data burst (D) at the first frequency (f1) if no synchronization signal (Bi) is received.

13. System (1) for providing hopping radio transmission, the system comprising
at least one transmitter (10) according to claim 9 or 10; and
at least one receiver (20) according to claim 11 or 12.

14. System (1) according to claim 13, wherein the at least one transmitter (10) and the at least one receiver (20) each comprise a determination device configured to determine the further frequency (f2) based on an external time signal.

15. System according to claim 14, wherein each determining device comprises a global navigation system signal receiver, and wherein the further frequency (f2) is determined based on a time signal of a signal received by the global navigation system signal receiver.
